(19) Europäisches Patentamt

European Patent Office

Office européen des brevets

(11) **EP 1 610 499 A2**

(12) **EUROPEAN PATENT APPLICATION**

(43) Date of publication:
**28.12.2005 Bulletin 2005/52**

(51) Int Cl.⁷: **H04L 12/40**

(21) Application number: **05013337.0**

(22) Date of filing: **21.06.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **21.06.2004 EP 04425450**

(71) Applicant: **Gefran S.p.A.**
**25050 Provaglio d'Iseo (Brescia) (IT)**

(72) Inventors:
 • **Flammini, Alessandra**
  **25000 Brescia (IT)**
 • **Cattaneo, Carlo**
  **25050 Provaglio d'Iseo (Brescia) (IT)**

(74) Representative: **Ferrari, Barbara**
**Botti & Ferrari S.r.l.,**
**Via Locatelli, 5**
**20124 Milano (IT)**

(54) **Synchronization and communication protocol for remote process**

(57)  Management method of remote input and output devices on Ethernet associated with industrial automation machines connected to a master device, communicating with them at cyclical intervals with the start of the cycle established by the master device and duration of the cycle being a multiple of a predetermined time interval. The master device organises the communication between the input and output devices through the sending of broadcasting messages on the Ethernet, containing the signals of the output devices of all the possible output devices, and of multiple messages of predetermined duration containing the responses of the input devices. The interception of a threshold on an input device and the actuation of the consequent action on the corresponding output device takes place with a programmable latency of less than 500 µs and with a jitter of less than 10 µs, whilst still in the presence of a synchronisation message subject to significant jitter.

FIG. 5

**Description**

<u>Field of application</u>

The present invention refers to a management method of remote input and output devices on Ethernet for industrial automation machines, for example machines for injection moulding and similar, connected to a master device that is in communication with said remote devices at cyclical intervals and in which at least the following communication steps are included:

- the master device sending a predetermined message for the synchronisation of the current communication cycle;

- the master device broadcasting a message containing the signals of the output devices for all of the input and output devices of said network to all Ns of the input and/or output devices;

- sending multiple slots of predetermined length containing the responses of the input devices and sending possible zero slots used for synchronisation.

More specifically, the invention is based on a system of the aforementioned type with cyclical and isochronous architecture, based on switched Ethernet 100BaseT, which establishes a virtual connection between a master device and a plurality N of input and output devices known as slaves.

<u>Prior art</u>

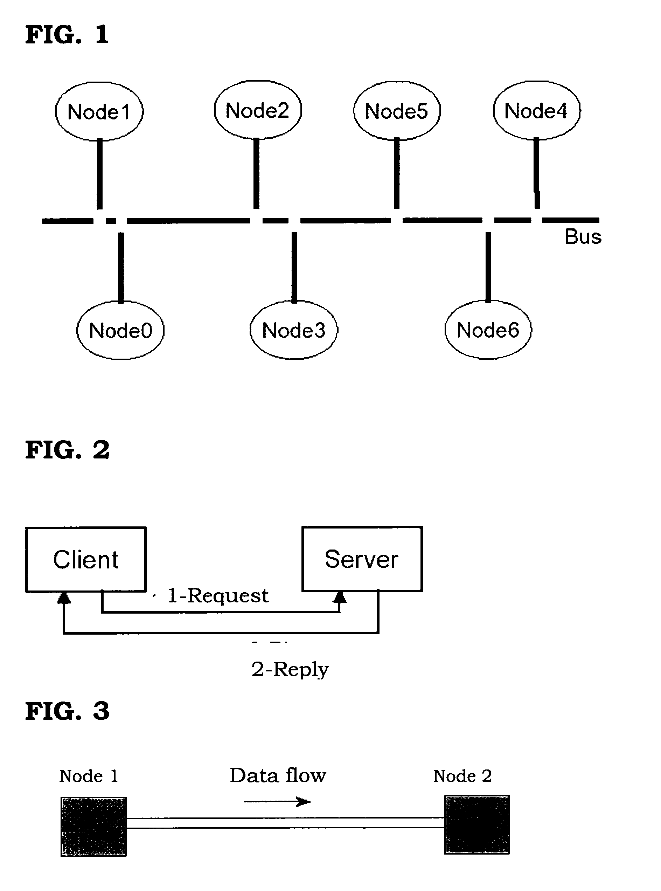

Currently, communication in the field of industrial automation can be carried out through so-called fieldbuses. Fieldbus is a term defined within the IEC (International Electrotechnical Commission) to indicate, in an automated process of an industrial plant, the "serial" communication standard between different electronic devices cooperating to carry out the process, for example field devices (sensors, actuators, etc.) and control devices (PLC).
Each of the devices cooperating during the course of the execution of the process is generally known as "node". In figure 1 a schematic example of a plurality of nodes connected to a same fieldbus is shown.
The problems that have to be faced in this field concern the great distance between the various parts making up the plant and the standardisation of the signals transmitted for the communication between the devices. In figure 2 a simple client-server type scheme is shown that corresponds to the methods of interconnection of the devices in the industrial plant.
The communication between the nodes is normally managed according to a known protocol that is characteristic of each type of fieldbus. The ISO/OSI model is the reference for the protocols and is based on seven levels:

- Application (description of the interface towards the application)

- Presentation (conversion of codes and syntax check)

- Session (management of the work sessions)

- Transport (opening and closing of the connections)

- Network (routing information)

- Data Link (plot format and verification of correctness)

- Physical (physical characteristics - electrical levels, encoding...-)

The communication protocols arise from the requirement of connecting and making apparatuses of different manufacturers communicate with each other. However, not all applications adopt the complete ISO/OSI model.
Even at the high processing speeds of modern microprocessors, crossing all the seven levels requires considerable times, incompatible with the times necessary for an effective process control.
Therefore, there arises the need of being able to adopt protocols that increase efficiency in terms of data transmission speed still ensuring the strength of the system, in other words the capability to deliver the information content, its ease of use and flexibility of configuration.

The fieldbuses can be of different types:

In the Client-Server model, a so-called "Applicative Process" is the client of a service provided by another "Applicative Process".

In another model known as "Producer-(Distributor)-Consumer", the producer of a piece of data, on the other hand, makes it available (possibly upon the request of a distributor) to all possible consumers or users. In such a model data is diffused on the whole network in "broadcasting" mode and therefore its consistency is safeguarded.

Therefore, two fundamental aspects are covered by the selection criterion of a fieldbus:

- Performances.

- Past and future obsolescence and compatibility time.

The performances largely depend on the bus access method. In particular, the useful band that has a master device node available when, in a fieldbus system, there are just two nodes and the data transmission is monodirectional, as shown in figure 3, is defined Maximum Useful Passing Band (BPUMax).

The variation of the actual BPU with respect to the BPUMax as the number of nodes varies is a good parameter for comparing the performances of the different architectures.

The stratification system of the protocol, therefore, not only must reduce the complexity linked to the communication between devices through the abstraction levels and practically transparently to the end user but must minimise the delay due to the insertion of new nodes into the network structure.

But that is not all, a protocol must be able to adapt to the structural variations of the network without manual interventions, i.e. reacting to changes such as the addition or the elimination of nodes with a method that can allow a sort of self-configuration.

In the field of industrial automation, management methods of remote input and output devices on Ethernet for industrial automation machines are also known. Such methods includes the connection of a master device to a plurality of input and output devices through Ethernet.

The Ethernet connection is particularly advantageous since the master device can sit several of metres away from the industrial automation machine and can be interconnected to a plurality of input and output devices simultaneously, each of which is in turn associated with an industrial automation machine.

In such case, the master device is connected to a calculator, commonly already provided with interface board for the Ethernet, and through such calculator communicates with the input and output devices without use of repeaters, also over great distances. The Ethernet allows fairly complex management methods to be used, in which a single master device connects various remote input and output devices, also allowing the control network to be extended to the Internet, through known communication protocols such as TCP/IP.

A management method of remote input and output devices of the aforementioned type is described in the document "Object Oriented models and communication protocols in the factory", CENA G. ET AL, which refers to a strictly synchronous communication protocol.

In such document a cyclical and isochronous data sending method, from a master device to remote input and output devices, also known as slaves, based on Sercos network, is described. In particular, a synchronisation message is sent by the master at the start of each cycle that allows each remote input and output device to synchronise upon the reception of said message.

After a predetermined time interval from the reception of the synchronisation message, the remote input and output devices sends data to the master device. Such data are then forwarded, in a single message, from the master device to the remote input or output device the data are destined to.

Whilst advantageous from some points of view, the aforementioned method as well as other methods based on the Ethernet standard have recognised drawbacks, highlighted hereafter. Firstly, a management method of remote input and output devices must be deterministic, i.e. it must ensure that the communication with the master device takes place at cyclical intervals having practically zero delay; the Ethernet standard, in such a sense, is not deterministic since the communication via cable can undergo intolerable delays.

This requirement is nevertheless satisfied by some protocols, based on the different variants of the protocol with IEEE 1588 synchronism, which carry out closed cycle communication directly via Ethernet. Such standard allows the remote input and output devices present in Ethernet to synchronise their clocks referring to the clock of a master device, which constitutes an absolute time reference.

This standard nevertheless requires that the clock of the master device be high-precision since the latencies, which at Ethernet level are measured in fractions of a second, are considered unacceptable in the case of precise industrial automation machines that can receive hundreds of control instructions in a few seconds.

The technical problem forming the basis of the present invention is that of devising a management method of remote input and output devices on Ethernet, having such functional characteristics as to allow a synchronisation of the remote input and output devices also in the absence of a real absolute time reference, which overcomes the limitations and/or drawbacks that still limit the methods according to the prior art.

Moreover, the method according to the invention should minimise the transmission time by managing the configuration and installation steps of the new network "components" practically autonomously.

Summary of the invention

The solution idea forming the basis of the present invention is that of managing the remote input and output devices active during the course of the process through a method that reduces the delay (latency) and the relative variability (jitter) between input event and consequent output event and that makes the exchanges and communications between the remote input and output devices totally similar to those that occur locally.

The aforementioned technical problem is solved by a management method of the type indicated previously and characterised in that the generation of a reaction signal by a remote input and output device, consequent to the actuation of a given action or event by another remote input and output device, takes place with a programmable latency and negligible jitter with respect to the possible tolerated jitter on the synchronism of the communication also in the absence of a real absolute and stable time reference generated by the master device.

The technical problem is also solved by partially disassociating the synchronism of the management mechanism of the inputs and outputs from the communication synchronism.

The characteristics and advantages of the methodology and protocol according to the invention shall become clearer from the following description of an embodiment thereof, given for indicating and not limiting purposes with reference to the attached drawings.

Brief description of the drawings

Figure 1 is a schematic view of devices connected to a fieldbus;

Figure 2 schematically shows a Client/ Server model as the possible selection for a type of network;

Figure 3 schematically illustrates a Maximum Passing Band as maximum passing band that has a master device available when, on a fieldbus channel, there are just two nodes and the data are sent monodirectionally;

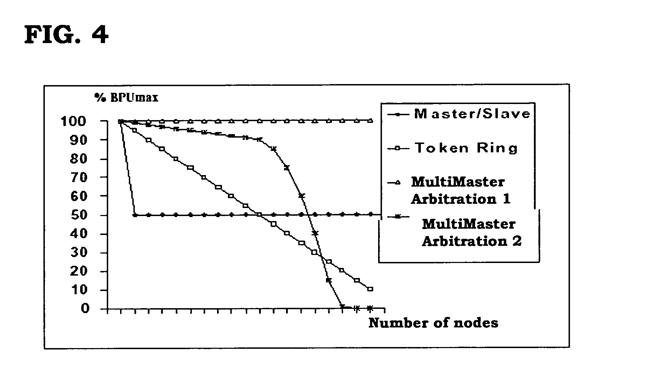

Figure 4 shows a diagram of the progression of the BPU according to the number of nodes of the network and the type of network selected;

Figure 5 schematically shows the operation of the method according to the invention, highlighting the connection Ethernet and the remote devices connected to it.

Figure 6 schematically shows the occurrence in time of the actions between detection of the event and actuation of the corresponding action.

Figure 7 shows an example of a type of network supported.

Figure 8 schematically shows the interception method of the thresholds.

Detailed description

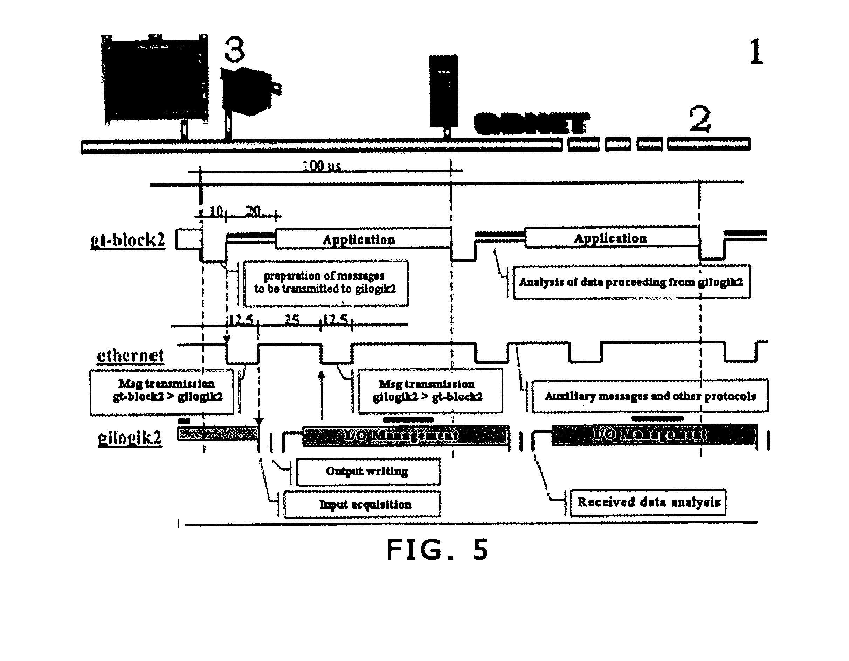

With reference to such figures, and in particular to the example of figure 5, a management method carried out in accordance with the present invention is globally and schematically illustrated with 1. In particular, remote input and output devices 2 are connected to a master device 4 through an Ethernet 3 and cooperate to carry out processes in an industrial plant.

The management method 1 also allows the interconnection network topology between the remote input and output devices to be self-configured and self-detected. In particular, the remote input and output devices 2 on Ethernet 3 for industrial automation machines, for example machine for injection moulding and similar, are connected to the master device 4 that is in communication with said remote devices 2 at cyclical intervals. The communication between said remote devices 2 and the master device 4 includes at least the following steps:

- the master device 4 sending a predetermined message for the synchronisation of the current communication cycle;

- the master device 4 broadcasting a message containing the signals of the output devices for all of the Ns input and output devices of said network to all of the input and/or output devices 2;

- sending multiple slots of predetermined length containing the responses of the input devices and sending possible zero slots used for synchronisation.

Advantageously, the management method 1 provides that the generation of a reaction signal by a remote input and output device 2, consequent to the actuation of a given action or event by another remote input and output device 2, takes place with a programmable latency even if all of the messages present on the Ethernet 3 are subject to significant jitter. Such programmable latency is less than 500 μs and with a jitter of less than 10 μs.

In particular, the start of the cyclical interval is established by the master device 4 through a synchronisation message and its duration is obtained through a sequence of n slots each having a duration (Tq) that is predetermined but tolerated with respect to modest variations between one slot and the other.

Advantageously, the synchronisation of the management mechanism of the inputs and outputs by the input and output devices 2 (Tsincro) hooks initially onto the reception (TSs) of the synchronisation message of the master 4, i.e.

$$Tsincro(1) = TSs(1)$$

$$Tc(1) = TSs(1) - TSs(0).$$

Tsincro thus updates equidistantly taking account of a small correction that on average follows the synchrony of the communication reducing the size of the jitter thereof, i.e.

$$Tc(k+1) = cost1*Tc(k) + cost2(TSs(k)-TSs(k-1))$$

$$Tsincro(k+1) = Tsincro(k) + Tc(k+1)$$

where cost1>>cost2 and cost2 can temporarily be forced almost to zero in the case of the lack of reception of a synchronisation message within the provided tolerances. The synchronisation mechanism of the management of the inputs and outputs is thus valid even in the temporary absence of the synchronisation message from the master 4.

Each input and output device 4 includes at least one I/O interface comprising a 768 bit input database and at least one 768 bit output database as well as a group of 255 contiguous data structures each consisting of 64 words.

The association of the input and output databases with the corresponding physical inputs and outputs of the network, such as analogue or digital inputs, inputs from specific sensors or analogue or digital outputs, is flexible and programmable by the master device 4.

The synchronisation with respect to the reading of the input databases of an input device and writing device 2 with programmable latency of the outputs of another output device 2 ensures a jitter of less than 10 μs, not only in the reading of the input databases and writing databases of the output databases but also between the interception of a threshold and the actuation of the consequent action substantially reducing the effect of the possible jitter relative to the sending of the synchronisation message by the master.

The method according to the invention supports star-type connection with standard switch "store&forward" and compensation of the delay introduced, and manages up to a maximum of three logic subnetworks and seven remote input and output devices 2 for each subnetwork.

The Ethernet 3 is able to self-configure, upon reset, the remote input and output devices 2, in a time of less than 100 ms with at least seven remote input and output devices 2.

In the rest of the description reference shall be made to the method 1 of the invention with the abbreviation GD-NET. GD-NET allows the communication between the master device and a plurality Ns of remote input and output devices 2 to be improved for the purposes of the synchronisation of input and output events. The number Ns of remote input and output devices 2 is preferably not more than seven but the GD-NET protocol can support networks up to a maximum of twenty-one remote devices 2.

The organisation of the management method 1 is transparent at the level of applicative software of the master device 4 in the sense that the terms used (slave device, slot, etc...) are transcoded through an equivalency table and by virtue of the stratification into levels that allows the association between identifier at management level and identifier at protocol level of the remote input and output device 2.

Each remote input and output device 2 is identified in the GD-NET protocol by a device code Ns (1<= Ns <= 7) and by a network code Nr (1 <= Nr <= 3) of belonging to a subnetwork. More specifically, a remote input and output device 2 includes at least one I/O interface comprising a 768 bit input database and at least one 768 bit output database as well as a group of 255 contiguous data structures each consisting of 64 words. The association of the physical input and output databases with each word of the database is flexible and programmable by the master device. Such databases are simultaneously accessible at every scanning cycle whereas the data structures are accessible individually and not more than one at each scanning cycle.

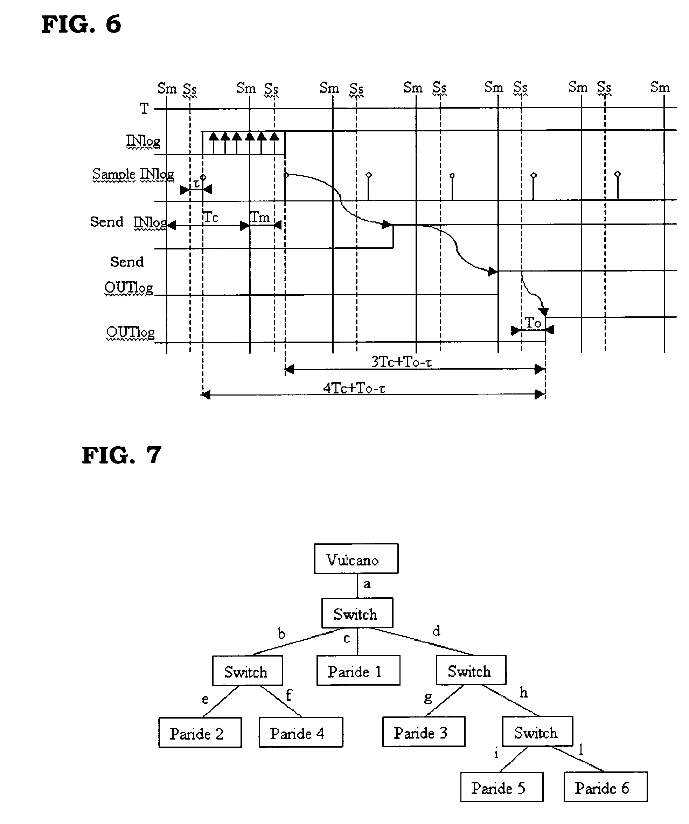

In particular, with reference to figure 6, the master device 4, during the cycle k, sends the outputs Out at the instants Sm, which the remote devices 2 actuate with a programmable delay To with respect to the instant Ss of reception of the broadcasting message.

Again after a fixed time τ from having received the broadcasting message of the cycle k, all the remote devices 2 carry out the sampling of the inputs (SampleIN) and, in the cycle k+1, send the results of the measurements (InvioIn) with fixed delay of Ss. The master device 4 can start to manage such data at the start of the cycle k+2 interrupt.

The consequent outputs shall be sent and actuated in the cycle k+3. The time To that passes between the synchronisation instant Ss and the actuation of the outputs can be programmed by the master device 4; normally, it is positioned at To=3Tc/4 and can be varied between Tc/4 and 5Tc/4. Overall, the delay between the detection of an input and the consequent actuation of an output can vary between 3Tc+To-τ and 4Tc+To-τ.

Even more specifically, by Sm we mean the instant of synchronisation of the master device, i.e. the timing interrupt every Tc, whereas by Ss we mean the instant of synchronisation of the remote device 4, i.e. the instant in which it receives the broadcast packet. The distance between Sm and Ss is practically fixed for all of the input and output devices under a same switch (for this reason it would be better to include a switch 1 to 4 and a switch 1 to 8: if, on the other hand, the cascade between 2 switches is carried out, then the 3 input and output devices under the first switch synchronise in Ss whereas the 4 input and output devices under the second switch would synchronise in Ss2>Ss). The networks on which the GD-NET protocol is based are of the switched Ethernet type and consist of Nr subnetworks (with 1<=Nr<=3) each of which supports the sequential scanning of Ns remote input and output devices 2 (with 1<=Ns<=7):

Network1 ->   Network2 ->   Network3 ->   Network1 ->

Network2 -> ...

The management method 1 is based on the transmission of a quantized message Tq=12.5 µs. A quantized message Tq consists of 678 input bits and 678 output bits with continuous scanning and flanked by sporadic access data structures like those previously quoted.

The architecture of the GD-NET protocol is also cyclical since the master device cyclically sends:

1) a synchronisation message

2) alias time slot

3) Ns time slots

4) Nn zero slots

In particular:

1) The synchronisation message is a broadcasting message sent by the master device 4 to all the remote input and output devices 2 of a same network. Such message contains the signals of the output devices of all of the remote output devices 2 for all of the Ns remote devices 2 of a certain network and has a duration M*Tq (typically M=Ns).

2) The alias time slot is a slot of duration A*Tq (A>1) reserved for other communications (for example individual access to the data structures of the single slave device, TCP/IP or UDP/IP communications,...). The use and state of occupation of such slot is specified in the broadcasting synchronisation message of the master device 4. The typical value of A is 2.

3) The Ns time slots have a duration equal to Tq and contain the possible responses of the remote input and output devices 2. The remote device 2 can be programmed to send its database at each cycle or only if it is changed. On the other hand, the master device 4 always sends the output databases, even if they have not changed.

4) Possible Nn zero slots generally used to synchronise the networks.

Overall, therefore, the typical cycle time Tc, presuming zero delay switch is Tc = (2Ns+A*Tq), depends on the number of remote input and output devices.

To optimise the cycle time Tc, the GD-NET protocol identifies the insertion or exclusion of a remote on-line device 2, managing plug&play installations. The master device 4 could periodically scan all the remote input and output devices (from 0 to 7), with period greater than Tc, to find out whether any connected remote devices 2 have disconnected (remote device from one to seven) and/or whether any remote devices 2 have been added (zero remote device).

In reality, to see whether any active remote devices 2 have disconnected it is sufficient every so often to ask for the database to all the remote devices 2, whereas to see whether any remote devices 2 have connected it is sufficient to periodically ask the remote device 2 with zero address.

The change in hardware configuration of a remote device 2 (modification of the configuration of the I/O modules) is detected as an anomaly and therefore is immediately indicated to the master device 4. Since the scanning cycle of the network is dependent on the number of remote devices 2 it can easily be understood how important such characteristic of self-detection is for the purposes of optimising the efficiency of the network practically instantly and independently.

The GD-NET protocol thus carries out a self-configuration method that identifies the type of network in less than 100 ms from reset (with 7 remote devices 2): in addition to the message of the typical cycle, configuration messages are indeed sent. In particular, at reset all the remote devices 2 respond as if they were zero type remote devices 2, i. e. without slot allocation (the possible collisions are resolved at switch level and in any case imply only a delay, of no influence because it happens at reset).

The master device 4 sends a synchrony message with configuration data request for the zero remote device 2. All the remote devices 2 send their hardware configuration (how many and which logic input modules, how many and which analogue input modules, ...) including the status of the identification dipswitches of the remote devices at management level.

The master device 4, thanks to the uniqueness of the Ethernet address 3 of each remote device 2, can assign remote devices 2 a remote device identifier and a network identifier, also specifying whether that remote device is also assigned other network/remote device codes to have better refreshing of one database or many databases. Moreover, the master device 4 specifies the meaning of every word of the database and in particular which address of which module and which data treatment function it refers to.

The management method 1 includes a synchronisation mechanism with respect to the reading of the inputs and the writing of the outputs that ensures jitter tending towards zero ($\approx\mu$s) not only in the writing of the outputs or in the reading of the inputs, but even between the interception of a threshold and the actuation of the consequent action.

To optimise the cycle time Tc the master device 4 can activate a synchronisation procedure. The master device 4 sends a synchronisation broadcasting message for each network specifying which remote device 2 must respond in broadcast. The response of such remote device is an Echo message of known length that occupies the Alias slot.

The insertion of switches in the structure of a network inevitably involves delays due to routing, i.e. due to the reception of the message and the identification of the destination it must be delivered to.

The topology of the connection of the GD-NET protocol supports "store&forward" standard switches for which the protocol advantageously provides the minimum change of direction of the data (first all the messages from master device 4 to remote device 2 and then all the messages from remote device 2 to master device 4): in this way the delay due to the switches can be sized to a first approximation as equal to *Nsw \* (Tms + Tsm)* where Nsw is the number of switches, Tms is the time necessary to send the maximum message from master device 4 to remote device 2 and Tsm is the time necessary to send the maximum message from remote device 2 to master device 4.

With reference to the switched Ethernet topology of figure 7, the time necessary to carry out one cycle can be calculated, equal to 35Tq, a value of less than 38, i.e. the value derived from the equation (eq. 1) shown below for convenience, with Na=2, Ns=6, Nsw=3.

$$Tc = Nsw(Ns+Na) + 2Ns + Na = Na(Nsw+1) + Ns(Nsw+2) \qquad \text{(eq. 1)}$$

This occurs since the formula does not take into account the overlapping that happens thanks to the full duplex. As it can be seen the switch between the segment a and the segment b must memorise the response of the remote device 2 to allow the completion of the Alias message. This occurs since the duration of the Alias message is different from that of the database messages coming from the remote devices 2.

It should be repeated that in the case of a Hub or "cut through" switch there would not have been a collision since the delay introduced is, as well as lower, independent from the length of the message. The actual number of switches is 4 and not 3 as considered in the application of the equation 1, nevertheless the number of switches that actually cause the delay is equal to the number of switches that appear on the longest branch (in a banner connection all the switches would belong to the single branch and therefore it is the worst case, i.e. the slowest).

As already seen, the remote input and output devices 2 all set out with network identifier and remote device identifier respectively equal to 1 and 0. The master device 4 asks such an identifier for the database and thus is able to know the number Ns of remote devices.

At this point, the master device 4 sizes the cycle time Tc according to the equation 1 in the worst case scenario (banner topology Nsw=Ns-1) and numbers (assigns Net_ID and Slave_ID in a progressively increasing manner) according to the order of arrival of the messages so that the farthest remote device (with more switches between itself and the master) is the last one. In the numbering step it also assigns position, i.e. the number of waiting slots Tq from the arrival of the broadcasting message to when the remote device 2 sends its data, which is fixed equal to Na+Ns-1 (typically Na=2).

The database of the I/O interface of each remote device 2 is of a fixed size equal to 118 words divided as follows:

From master device towards remote device:

-    information common to all the remote devices (3 words);

-    local information for the remote device j (8 words);

-    output database for the remote device j (48 words).

From remote device towards master device:

-    local information of the remote device j (11 words);

-    input database of the remote device j (48 words).

The database is exchanged without acknowledgement in the following ways:

-    from master device to remote device (outputs) in broadcast mode in the synchronisation message;

-    from remote device to master device (Inputs) in the time slot assigned to the remote device.

The database from master device to remote device is always exchanged, whereas the database from remote device to master device can be exchanged upon request of the master device even at each scanning cycle (always) or just at any change of the inputs.

If a remote device is not asked for its database and nothing happens at its inputs and no anomaly is detected then for that cycle the remote device does not send anything: therefore a watch-dog mechanism must be provided, like for example the database request by the remote device to all the remote devices every 10 ms.

Local information contain a further possibility of access (direct access) that allows a word to be read or written at any address of the modules or of the data structures. Writing follows the timing of the outputs whereas reading is immediate (upon the reception of the broadcasting message).

Each remote device 2 can therefore manage a database (inputs + outputs) comprising at most:

48 words for the inputs;

11 words for the DB INPUT information;

48 words for the outputs;

3+8 words for the DB OUTPUT information,

**EP 1 610 499 A2**

i.e. 96+22=118.

The position of the various modules in the database is flexible, in the sense that:

- it is the master device that decides the order of allocation in the database;

- for every type of module there is occupation of DB IN or of DB OUT or else both;

the theoretical limit to the database words dedicated to one module is 16 (deriving from the visible exchange space without paging). An event indication is generated when a threshold is exceeded by an analogue input or else when there is a change in value on some particular digital input lines; in both cases the n-th bit of the *Data_Event* field is raised.
It should be noted that in the case in which the generation of the event occurs on digital input, masks are used so as to be able to select which lines generate an event; by indicating the digital input word at the instant I with $W_i$, the one at the previous instant with $W_{i-1}$ and the n-th mask with $M_i$, the following applies:

$$Data\_Event(i)=(W_i(X)W_{i-1})\&M_i$$

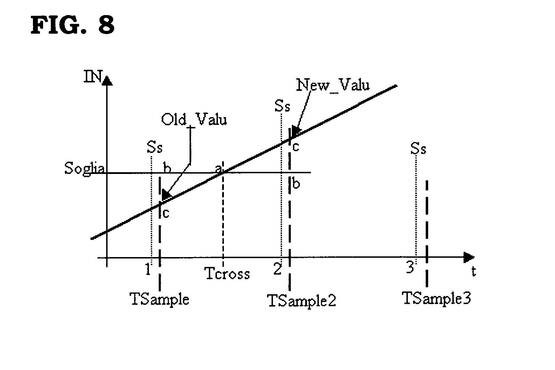

For example, the mask "0011111111111111" does not generate events for 14 and 15 bits.
If, on the other hand, the generation of the event occurs on analogue input, the only situation that causes the event is a threshold being exceeded (exceeding the deadband causes the database to be sent but not the event). In this case the remote device calculates the instant of crossing the threshold and transmits it into the *Cross_Time* field. The typical situation is represented in figure 8.
If the exceeding of the threshold occurs in cycle k, the remote device only detects it in cycle k+1 and here estimates Tcross through linear interpolation. The event shall be notified in the database and then sent to the master device in cycle k+2.
<u>Tcross estimation</u>: from the similarity of triangles abc and ab'c' the following applies:

$$(Tcross\text{-}Tsample)/(Tsample2\text{-}Tsample) = (Threshold\text{-}$$

$$Old\_Valu)/(New\_Valu\text{-}Old\_Valu)$$

From which:

$$Tcross = Tsample + (Tsample2\text{-}Tsample)* (Threshold\text{-}$$

$$Old\_Valu)/(New\_Val\text{-}Old\_Val)$$

The inverse can be carried out through the use of a look-up table to reduce the execution time (including the use of uP without dividers), thus indicating with Fact=New_Value-Old_Value and with Cost=1/Fact, the following applies

$$If\ (Fact<=255) \qquad \rightarrow Cost := Look\_F(Fact)$$

$$Else\ if\ (Fact<=4096) \qquad \rightarrow Cost := Look\_M(Fact)$$

$$Else \qquad \rightarrow Cost := Look\_R(Fact)$$

Where Look_x are three different look_up tables of 256 values each that implement the inverse in the three ranges with a different stage (Stage 1 for Look_F, 16 for Look_M and 256 for Look_R). For the application under examination with 16 bit data the Look_R table can be too extensive, and therefore just Look_F and Look_M can be used with widened stage, for example up to Fact 8k with stage 32. To reduce the rounding losses in the division it is suitable to memorise the value 65536/Fact in the look_up table, remembering to carry out the shift to the right by 16 positions after having carried out the multiplication.

9

The method according to the invention has the great advantage of allowing simple and reliable communication of the remote devices of the industrial plant that are active during the course of a given process ensuring that the generation of a reaction signal by a remote input and output device, consequent to the actuation of a given action or event by another remote input and output device, occurs with a programmable latency and minimal jitter, although the synchronisation message generated by the master can be subject to significant jitter. The method according to the invention represents a management system of remote input and output devices that reduces the delay (latency) and the relative variability (jitter) between input event and consequent output event and makes the exchanges and the remote input/output communications totally similar to those that occur locally.

Moreover, a period of refreshment of the inputs and of updating of the minor outputs with respect to the period of execution of a normal PLC is ensured, whilst still not requiring processors dedicated to the communication step.

**Claims**

1. Management method of remote input and output devices on Ethernet network for industrial automation machines, for example machines for injection moulding and similar, connected to a master device that is in communication with said remote devices at cyclical intervals and in which at least the following communication steps are included:

    - the master device sending a predetermined message for the synchronisation of the current communication cycle;

    - the master device broadcasting a message containing the signals of the output devices for all the Ns input and output devices of said network to all the input and/or output devices;

    - sending multiple slots of predetermined length containing the responses of the input devices and sending possible zero slots used for synchronisation;

    and **characterised in that** the generation of a reaction signal by a remote input and output device, consequent to the actuation of a given action or event by another remote input and output device, takes place with a programmable latency and negligible jitter with respect to the possible tolerated jitter on the synchronism of the communication also in the absence of a real absolute and stable time reference generated by the master device.

2. Method according to claim 1, **characterised in that** said programmable latency is less than 500 μs and with a jitter of less than 10 μs.

3. Method according to claim 1, **characterised in that** the start of said cyclical interval is established by the master device and its duration is obtained through the sequence of n slots each having a predetermined duration (Tq) but also with a modest variation range between one slot and the other.

4. Method according to claim 3, **characterised in that** each input and output device, at protocol level, comprises at least one I/O interface comprising a 768 bit input database and at least one 768 bit output database as well as a group of 255 contiguous data structures each consisting of 64 words.

5. Method according to claim 3, **characterised in that** the association of said input and output databases with the corresponding physical inputs and outputs of the network, such as analogue or digital inputs, inputs from specific sensors or analogue or digital outputs, is flexible and programmable by the master device.

6. Method according to claim 1, **characterised in that** the synchronisation mechanism with respect to the reading of the input databases of an input and writing device with programmable latency of the outputs of another output device ensures a jitter of less than 10 μs, not only in the reading of the input databases and writing of the output databases but also between the interception of a threshold and the actuation of the consequent action without requiring that the two input and output devices have synchronised time references.

7. Method according to claim 3, **characterised in that** said communication step supports star-type connection topologies with standard switch "store&forward" support and compensation of the delay introduced, and manages up to a maximum of three logic subnetworks and seven remote input and output devices for each subnetwork.

8. Method according to claim 3, **characterised in that** the Ethernet self-configures at reset and, more generally, the system of input and output devices self-configures, in a time of less than 100 ms with at least seven input and output devices.

9. Interconnection system between electronic devices intended to talk and cooperate with each other through an Ethernet of an industrial plant for carrying out a given process, **characterised in that** it includes a communication protocol according to any one of claims 1 to 8.

**FIG. 1**

Node1  Node2  Node5  Node4

Bus

Node0  Node3  Node6

**FIG. 2**

Client  Server

1-Request

2-Reply

**FIG. 3**

Node 1  Data flow  Node 2

# FIG. 4

FIG. 5

**FIG. 6**

**FIG. 7**

# FIG. 8